# EUROPÄISCHE PATENTSCHRIFT

(11) **EP 2 010 974 B1**
(45) Veröffentlichungstag und Bekanntmachung des Hinweises auf die Patenterteilung: **13.09.2017**
(21) Anmeldenummer: 07704670.4
(22) Anmeldetag: 21.02.2007
(51) Int. Cl.: G05B 19/042

(54) **ENGINEERINGSYSTEM UND VERFAHREN ZUR PROJEKTIERUNG EINES AUTOMATISIERUNGSSYSTEMS**
ENGINEERING SYSTEM AND METHOD FOR PLANNING AN AUTOMATION SYSTEM
SYSTÈME D'INGÉNIERIE ET PROCÉDÉ POUR ÉLABORER UN PROJET D'UN SYSTÈME D'AUTOMATISATION

(30) Priorität: 25.04.2006 DE 102006019091
(43) Veröffentlichungstag der Anmeldung: 07.01.2009
(73) Patentinhaber: Siemens Aktiengesellschaft, 80333 München (DE)
(72) Erfinder: GRIEB, Herbert, 76316 Malsch (DE); GUTERMUTH, Wolfgang, 64287 Darmstadt (DE); VOLKMANN, Frank, 90475 Nürnberg (DE); WERNER, Stefan, 90480 Nürnberg (DE)
(86) Internationale Anmeldenummer: PCT/EP2007/051641
(87) Internationale Veröffentlichungsnummer: WO 2007/122024

(56) Entgegenhaltungen:
- US-A- 5 712 980
- US-A- 6 141 595
- EYCHENNE Y ET AL: "The use of object groups to implement dependability in a process control supervision system" FAULT-TOLERANT COMPUTING, 1993. FTCS-23. DIGEST OF PAPERS., THE TWENTY-THIRD INTERNATIONAL SYMPOSIUM ON TOULOUSE, FRANCE 22-24 JUNE 1993, LOS ALAMITOS, CA, USA,IEEE COMPUT. SOC, 22. Juni 1993 (1993-06-22), Seiten 660-665, XP010251383 ISBN: 0-8186-3680-7

## Beschreibung

Die Erfindung betrifft ein Engineeringsystem sowie ein Verfahren zur Projektierung eines Automatisierungssystems. Unter dem Begriff Automatisierungssystem ist hier sowie im gesamten Dokument ein System zu verstehen, welches mit Hilfe technischer Mittel bestimmte Operationen ohne Einflußnahme des Menschen teilweise oder ganz nach vorgegebenen Programmen durchführt. Operationen bezeichnen in diesem Zusammenhang z.B. Fertigungsprozesse, Montageprozesse, Transportprozesse, Prozesse zur Qualitätskontrolle etc., die insbesondere im industriellen Umfeld ablaufen.

In heutigen Engineeringsystemen, insbesondere sogenannten Scada Systemen (Scada = Supervisory Control and Data Acquisition), besteht eine der Hauptaufgaben darin, Systeme zu projektieren, die Werte aus einem industriellen Automatsierungsprozess aufnehmen, weiterverarbeiten und anzeigen. Hierzu müssen zunächst entsprechende Datenquellen, die auch als Tags bezeichnet werden, aus dem industriellen Prozess "importiert" werden. Um die Variablen mit dem Scada System importierten zu können, müssen diese dem Engineeringsystem zuerst bekannt gemacht werden und mit Eigenschaften wie z.B. Datentyp oder einen symbolischen Namen versehen werden. Anschließen können mit Hilfe des Engineeringsystems derartige Werte aus dem industriellen Automatisierungsprozess in mathematischen Formeln verarbeitet werden, um einen neuen Wert zu generieren. Ein Beispiel hierfür ist die Berechnung einer Leistungskennzahl aus den Prozesswerten des Automatisierungsprozesses. Eine solche Leistungskennzahl wird auch als Key Performance Indicator (KPI) bezeichnet. Beispielsweise kann der Gesamtstromverbrauch einer Zelle oder eines Anlagenteils des Automatisierungssystems ermittelt werden, indem der Stromverbrauch aller beteiligten Verbraucher in Form entsprechender Prozesswerte aus dem System importiert wird und manschließend mit Hilfe einer mathematischen Beziehung aufsummiert wird. Wird der betroffene Anlagenteil bzw. die betroffene Zelle um ein neues Automatisierungsgerät ergänzt, welches ebenfalls zum Stromverbrauch beiträgt, so muss die mathematische Beziehung entsprechend der neuen Konfiguration modifiziert werden, um einen korrekten Gesamtstromverbrauch zu berechnen. Häufig werden auch ganze Anlagenteile dupliziert, um eine höhere Produktionsmenge zu erreichen.

Aus US 5,712,980 ist ein Compiler-Linker-System bekannt, welches Klassenbibliotheken (class librarys) umfasst, welche vordefiniert und bei Änderungen neu übersetzt werden muss.

Der Erfindung liegt die Aufgabe zugrunde, die Projektierung eines Automatisierungssystems insbesondere bei einer Änderung und/oder Erweiterung der Konfiguration des Automatisierungssystems zu erleichtern.

Diese Aufgabe wird durch ein Engineeringsystem zur Projektierung eines Automatisierungssystems gelöst, wobei das Engineeringsystem umfasst:
- Mittel zur Zuteilung eines Klassenattributes zu Prozessvariablen eines mit dem Automatisierungssystem durchführbaren Automatisierungsprozesses, wobei besagte Prozessvariablen einer gemeinsamen Klasse zuzuordnen sind, und
- Mittel zum Adressieren der Prozessvariablen mittels des Klassenattributes innerhalb einer mathematischen Beziehung zum Zeitpunkt der Berechnung einer Leistungskennzahl des Automatisierungssystems und
- Mittel zur Berechnung einer Leistungskennzahl des Automatisierungssystems (AS) mittels der mathematischen Beziehang.

Darüber hinaus wird diese Aufgabe durch ein Verfahren zur Projektierung eines Automatisierungssystems mit folgenden Verfahrensschritten gelöst:
- Zuteilen eines Klassenattributes zu Prozessvariablen eines mit dem Automatisierungssystem durchführbaren Automatisierungsprozesses, wobei besagte Prozessvariablen einer genmeinsamen Klasse zuzuordnen sind, und
- Adressieren der Prozessvariablen mittels des Klassenattributes innerhalb einer mathematischen Beziehung zum Zeitpunkt der Berechnung einer Leistungskennzahl des Automatisierungssystems und
- Eine Leistungskennzahl des Automatisierungssystems (AS) mittels der mathematischen Beziehung berechnet wird.

Der Erfindung liegt die Erkenntnis zugrunde, dass sich die Projektierung des Automatisierungssystems erheblich erleichtern läßt, wenn die bei der Projektierung verwendeten Prozessvariablen bestimmten Klassen oder Gruppen zugeordnet sind. Bei der Formelbildung können dann Operationen auf ganze Klassen von Prozessvariablen, die in der Automatisierungswelt auch als Tags bezeichnet werden, definiert werden. Beispielsweise könnte eine Anweisung lauten, "Summiere alle Tags der Klasse Stromverbrauch". Der besondere Vorteil einer derartigen Vorgehensweise ist darin zu sehen, dass nun bei einer Erweiterung der Anlage um eine neue Komponente, die ebenfalls zum Stromverbrauch beiträgt, dieser Komponente zuzuordnende Prozessvariablen bzw. Tags nur der Klasse "Stromverbrauch", mit Hilfe des Klassenattributes zugeordnet werden müssen, um zu erreichen das auch der Stromverbrauch der neuen Komponente bei der Berechnung des Gesamtstromverbrauches berücksichtigt wird. Eine Modifikation der mathematischen Beziehung zur Berechnung des Stromverbrauches ist hierbei nicht erforderlich. Vielmehr muss bei einer Erweiterung der Anlage kein Wissen über bereits im System vorhandene, auf Prozessvariablen zugreifende Formeln bekannt sein. Da es durchaus wahrscheinlich ist, dass die bereits vorhanden Formeln von einer anderen Person erstellt wurden als der, die die Anlagenerweiterung durchführt, wird durch die mittels der Erfindung erzielte Entkopplung dieser Aufgaben eine schwerwiegende Fehlerquelle eliminiert, nämlich das Vergessen der Modifikation der vorhanden Formeln.

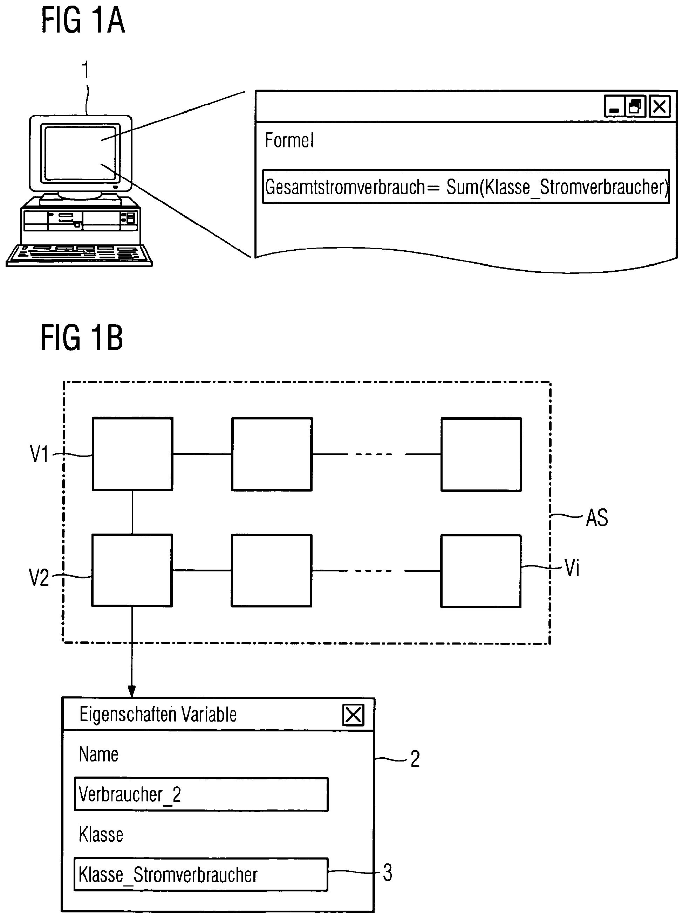

Die Zuteilung von Klassenattributen zu Prozessvariablen des Automatisierungssystems ist bei einer vorteilhaften Ausgestaltung der Erfindung besonders zweckdienlich, bei der das Engineeringsystem Mittel zur Berechnung einer Leistungskennzahl des Automatisierungssystems mittels der mathematischen Beziehung aufweist. Bei der Berechnung einer solchen Leistungskennzahl, die auch als Key Peformance Indicator (KPI) bezeichnet wird, entfällt das Nachbearbeiten Tag übergreifender Formeln, sofern die Tags bzw. Prozessvariablen mit Hilfe des Klassenattributes innerhalb der Formel adressiert werden. Im Folgenden wird die Erfindung anhand des in der Figur dargestellten Ausführungsbeispiels näher beschrieben und erläutert.

Die Figur zeigt schematisch ein Verfahren zur Projektierung eines Automatisierungssystems mit Hilfe eines Engineeringsystems.

Als Projektierungsaufgabe sei angenommen, den Gesamtstromverbrauch eines Automatisierungssystems AS zu berechnen, welches verschiedene in Wirkbeziehung zueinander stehende Komponenten enthält, die als Stromverbraucher Vl-Vi zum Gesamtstromverbrauch beitragen. Das Engineeringsystem ist auf einem mit dem Automatisierungssystem AS vernetzten Personal Computer 1 installiert. Zu Projektierungszwecken bietet das Engineeringsystem einem Anwender die Möglichkeit an, mathematische Beziehungen zu definieren und innerhalb dieser Beziehungen auf Prozessvariablen des auf dem Automatisierungssystem AS laufenden Automatisierungsprozesses zuzugreifen. Entsprechende Variablen bzw. Tags müssen zu diesem Zweck zunächst definiert sein.

Zur Variablendefinition stellt das Engineeringsystem einen Variablenfeld 2 für jede Prozessvariable zur Verfügung, innerhalb dessen Eigenschaften der Prozessvariablen, beispielsweise deren Name oder Datentyp (letzterer hier nicht dargestellt) von einem Anwender definiert werden können. Die Besonderheit der Variablendefinition innerhalb des dargestellten Engineeringsystems liegt darin, dass zusätzlich ein Eingabefeld 3 zur Definition eines Klassenattributes zur Verfügung gestellt wird. In dem dargestellten Beispiel wird einem Verbraucher V2 des Automatisierungssystems AS innerhalb des variablen Feldes 2 der Name "Verbraucher_2" und das Klassenattribut "KlasseStromverbraucher" zugewiesen.

Wird nun mit Hilfe des Engineeringsystems die mathematische Formel "Gesamtstromverbrauch = SUM (Klasse_Stromverbraucher)" definiert, so wird automatisch der Stromverbrauch des Verbrauchers V2 bei der Berechnung des Gesamtstromverbrauches berücksichtigt. Dies wäre auch der Fall, wenn der Verbraucher V2 erst im nach hinein, nachdem die beschriebene Formel bereits definiert wurde, in das Automatisierungssystem AS eingebracht wurde. Eine Modifikation der Formel zur Berechnung des Gesamtstromverbrauches ist nicht notwendig, da innerhalb der Formel durch eine einfache Anweisung eine komplette Klasse Tags adressiert wird, die zum Stromverbrauch beiträgt. Wird also eine neue Komponente in das Automatisierungssystem AS integriert, so muss eine zugehörige Variable lediglich mit dem entsprechenden Klassenattribut versehen werden. Das bedeutet natürlich auch, dass eine Person, die den Verbraucher V2 in das Automatisierungssystem AS installiert, keine Kenntnis über bereits mittels des Engineeringsystems definierte Formeln haben muss.

## Patentansprüche

1. Engineeringsystem zur Projektierung eines Automatisierungssystems (als), wobei das Engineeringsystem umfasst:
- Mittel zur Zuteilung eines Klassenattributes (2) zu Prozessvariablen eines mit dem Automatisierungssystem (AS) durchführbaren Automatisierungsprozesses, wobei besagte Prozessvariablen einer gemeinsamen Klasse (3) zuzuordnen sind, **gekennzeichnet durch**
- Mittel zum Adressieren der Prozessvariablen mittels des Klassenattributes innerhalb einer mathematischen Beziehung zum Zeitpunkt der Berechnung einer Leistungskennzahl des Automatisierungssystems, und
- Mittel zur Berechnung der Leistungskennzahl des Automatisierungssystems (AS) mittels der mathematischen Beziehung.

2. Verfahren zur Projektierung eines Automatisierungssystems (AS) mit folgenden Verfahrenschritten:
- Zuteilen eines Klassenattributes (2) zu Prozessvariablen eines mit dem Automatisierungssystem (AS) durchführbaren Automatisierungsprozesses, wobei besagte Prozessvariablen einer gemeinsamen Klasse zuzuordnen sind, **gekennzeichnet durch**
- Adressieren der Prozessvariablen mittels des Klassenattributes innerhalb einer mathematischen Beziehung zum Zeitpunkt der Berechnung einer Leistungskennzahl des Automatisierungssystems, und
- die Leistungskennzahl des Automatisierungssystems (AS) mittels der mathematischen Beziehung berechnet wird.

## Claims

1. Engineering system for planning an automation system (AS), the engineering system comprising:
- means for allocating a class attribute (2) to process variables of an automation process which can be carried out using the automation system (AS), said process variables being able to be assigned to a common class (3), **characterized by**
- means for addressing the process variables by means of the class attribute within a mathematical relationship at the time at which a performance index of the automation system is calculated, and
- means for calculating the performance index of the automation system (AS) by means of the mathematical relationship.

2. Method for planning an automation system (AS), having the following method steps of:
- allocating a class attribute (2) to process variables of an automation process which can be carried out using the automation system (AS), said process variables being able to be assigned to a common class,
**characterized by**
- addressing of the process variables by means of the class attribute within a mathematical relationship at the time at which a performance index of the automation system is calculated, and
- by the fact that the performance index of the automation system (AS) is calculated by means of the mathematical relationship.

## Revendications

1. Système d'ingénierie destiné à l'élaboration d'un projet d'un système d'automatisation (AS), dans lequel le système d'ingénierie comprend :
- des moyens destinés à l'assignation d'un attribut de classe (2) à des variables de processus d'un processus d'automatisation pouvant être exécuté avec le système d'automatisation (AS), dans lequel lesdites variables de processus sont à associer à une classe commune (3), **caractérisé par**
- des moyens destinés à l'adressage des variables de processus au moyen de l'attribut de classe au sein d'une relation mathématique au moment du calcul d'un indicateur clé de performances du système d'automatisation, et
- des moyens destinés au calcul de l'indicateur clé de performances du système d'automatisation (AS) au moyen de la relation mathématique.

2. Procédé destiné à l'élaboration d'un projet d'un système d'automatisation (AS) avec les étapes de procédé suivantes :
- l'assignation d'un attribut de classe (2) à des variables de processus d'un processus d'automatisation pouvant être exécuté avec le système d'automatisation (AS), dans lequel lesdites variables de processus sont à associer à une classe commune,
**caractérisé par**
- l'adressage des variables de processus au moyen de l'attribut de classe au sein d'une relation mathématique au moment du calcul d'un indicateur clé de performances du système d'automatisation, et
- l'indicateur clé de performances du système d'automatisation (AS) est calculé au moyen de la relation mathématique.
